# EUROPÄISCHE PATENTSCHRIFT

(11) **EP 0 950 939 B1**
(45) Veröffentlichungstag und Bekanntmachung des Hinweises auf die Patenterteilung: **08.06.2005**
(21) Anmeldenummer: 99106522.8
(22) Anmeldetag: 30.03.1999
(51) Int. Cl.: G05G 9/08

(54) **Betätigungssystem für Fahrzeuge**
Vehicle control system
Système de commande pour voiture

(30) Priorität: 17.04.1998 DE 19816991
(43) Veröffentlichungstag der Anmeldung: 20.10.1999
(73) Patentinhaber: DaimlerChrysler AG, 70567 Stuttgart (DE)
(72) Erfinder: Gauss, Hans-Martin, 71126 Gäufelden (DE); Hennefarth, Horst, 72218 Wildberg (DE); Klimas, Arnold, 71034 Böblingen (DE)

(56) Entgegenhaltungen:
- WO-A-97/29290
- US-A- 4 459 834
- US-A- 4 526 057

## Beschreibung

Die Erfindung betrifft ein Betätigungssystem für Fahrzeuge nach dem Oberbegriff des Patentanspruchs 1.

Aus US-A 4,526,057 ist ein solches Betätigungssystem bekannt, bei dem mit einer Seilzugeinrichtung mittels eines einzelnen Seiles, das in einer Kupplungsvorrichtung mit zwei parallel wirkenden Seilen verbunden ist, zwei Betätigungsmittel in Abhängigkeit der Bewegungsrichtung des einzelnen Seiles unabhängig voneinander betätigbar sind. Während bei einer Bewegung des einzelnen Seiles in der einen Richtung das eine der beiden Betätigungsmittel betätigt wird, wird bei einer Bewegung des Seiles in die andere Richtung das andere Betätigungsmittel betätigt.

Aus DE-GM 17 36 018 ist ein Betätigungssystem für eine Vielzahl parallel betätigbarer Türverriegelungen bekannt, mit dem von einer Bedienstelle aus über ein einziges Bedienelement mindestens zwei Betätigungsmittel fernbetätigbar sind. Dabei ist mittels des Bedienelementes eine einzelne Verbindungsstange unmittelbar bewegbar. Diese Verbindungsstange ist fester Bestandteil eines drehgesichert in einem Gehäuse geführten Schiebers. An diesem Schieber sind mehrere einzelne Betätigungsmittel über Zugseile lösbar angelenkt. Durch Bedienung des Bedienelementes werden dadurch sämtliche Betätigungsmittel gleichzeitig betätigt.

Aus DE 32 02 946 C2 sind Betätigungselemente bekannt, bei denen mit einem einzigen Bedienelement über zwei getrennte, direkt an dem Bedienelement angelenkte Seilzüge zwei von einander getrennte Betätigungsmittel bedient werden. Bei diesen Betätigungssystemen fehlt eine Kupplung innerhalb der Seilzuganordnung.

Die Erfindung beschäftigt sich mit dem Problem, ein Betätigungssystem zu schaffen, mit dem mindestens zwei getrennte Betätigungsmittel entweder, wenn diese gleiche Betätigungsspiele aufweisen, seitlich aufeinanderfolgend, das heißt mit zeitlichem Abstand nacheinander zu betätigen oder zeitlich gleichzeitig zu betätigen, wenn diese Betätigungselemente ungleiche Betätigungsspiele besitzen.

Gelöst wird dieses Problem durch ein gattungsgemäßes Betätigungssystem mit den kennzeichnenden Merkmalen des Patentanspruchs 1.

Durch ein solches System werden folgende Vorteile erreicht.

Bei getrennten Betätigungsmitteln, die gleiche Betätigungsspiele aufweisen, wird eine Verteilung der Betätigungskräfte für das Betätigen der zwei Betätigungsmittel erreicht, indem die Betätigungskräfte zeitlich hintereinander wirksam werden. Hierdurch wird das Betätigen mehrerer Betätigungsmittel über ein gleiches Bedienelement erleichtert.

Bei Betätigungselementen mit ungleichen Betätigungsspielen, die bauartbedingt bei einer Mehrzahl gleichzeitig zu bedienender Betätigungselemente vorliegen können, wird ein gleichzeitiges Betätigen der Betätigungselemente auf einfache Weise durch die erfindungsgemäße Systemausführung erreicht.

Für ein zeitgleich aufeinander abgestimmtes gemeinsames Betätigen mehrerer Betätigungsmittel ist der drehsichere Kupplungsschieber, der die miteinander in dem Kupplungsgehäuse verbundenen Zugseile aufnimmt, von besonderer Bedeutung. Bei einem sich in dem Kupplungsgehäuse verdrehenden Schieber würde die zeitliche Zuordnung beim Betätigen der getrennten Betätigungsmittel verändert werden.

Eine zeitverschoben durchführbare Betätigung von als Schlösser an der Motorhaube eines Kraftfahrzeuges ausgebildeten Betätigungsmitteln ist beispielsweise bei einer aus DE 1 855 640 GM bekannten Entriegelungseinrichtung nicht möglich. Dort sind die einzelnen Schlösser in Reihe an einem gemeinsamen Seilabschnitt angeschlossen. Bei einem Öffnen der Schlösser über ein Fern-Bedienungselement muß bei jener bekannten Einrichtung bei gleichzeitigem Öffnen der Schlösser die Summe der Schließkräfte der Schlösser gleichzeitig an dem Bedienelement aufgebracht werden. Bei einer Anbindung der Schlösser an dem Seilzug in Reihe sind ferner bei einer Montage der Entriegelungseinrichtung zunächst die Schlösser zu montieren , an denen erst danach der Seilzug befestigt werden kann. Diese Reihenfolge ist notwendig, um Schließ- bzw. Öffnungstoleranzen einhalten zu können. Dies ist montageunfreundlich.

Ein nachfolgend noch näher beschriebenes Ausführungsbeispiel der Erfindung ist in der Zeichnung dargestellt.

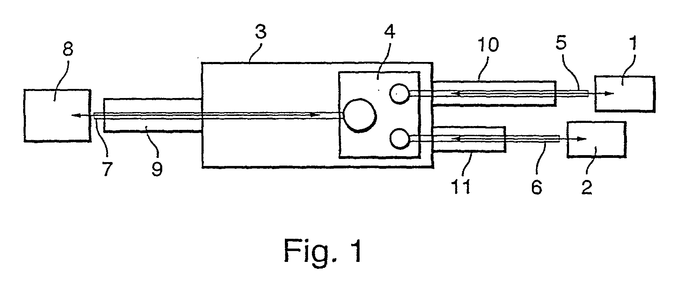

Diese zeigt in
- Fig. 1: eine schematische Darstellung einer Seilzugeinrichtung zur Entriegelung einer Motorhaube eines Kraftfahrzeuges.

Von zwei Schlössern 1 und 2 führt jeweils ein getrennter Bowdenzug 10, 11 einer Seilzuganordnung in ein Kupplungsgehäuse 3. In dem Kupplungsgehäuse 3 mit einem abnehmbaren Verschlußdeckel ist ein längsverschiebbarer Kupplungsschieber 4 gelagert, in dem die Enden der Zugseile 5 und 6 der beiden zu den Schlössern 1 und 2 führenden Bowdenzüge 10, 11 zugfest befestigt sind. An dem Kupplungsschieber 4 ist des weiteren das Zugseil 7 des zu einem Fern-Bedienungselement 8 führenden Bowdenzuges 9 lösbar angelenkt. Die Längen der an ihren Enden jeweils fest angebundenen in den zugehörigen Bowdenzügen 10, 11 geführten Zugseile 5, 6 sind derart auslegbar bzw. einstellbar, daß bei einer Betätigung des Fern-Bedienungselementes 8 die beiden Schlösser 1, 2 zeitlich hintereinander öffnen können. Die zeitliche Verzögerung ist dabei durch die von den Seillängen bestimmten Auslösespiele definiert. Bei einem zeitlich versetzten Öffnen der Schlösser 1, 2 stehen die Schließkräfte dieser beiden Schlösser 1, 2 beim Auslösen des Fern-Bedienungselementes 8 nicht gleichzeitig an, sondern werden auf dieses zeitlich hintereinander wirksam. Der Öffnungsvorgang wird für eine Bedienungsperson dadurch erleichtert.

Die zur Durchführung der Erfindung vorstehend beschriebenen Mittel können unverändert auch zur Montage eines Betätigungssystems verwendet werden, bei dem mehrere voneinander getrennte Betätigungsmittel durch das Fern-Bedienungselement 8 zeitgleich bedient werden sollen. Dies gilt insbesondere auch dann, wenn die Schlösser 1, 2 konstruktionsbedingt unterschiedliche Auslösespiele besitzen, die durch eine entsprechend angepaßte Auslegung der Längen der Zugseile 5, 6 in den zugehörigen Bowdenzügen 10, 11 leicht kompensiert und damit gegenseitig ausgeglichen werden können.

Die Verwendung des Kupplungsgehäuses 3 ermöglicht eine Vormontage der Schlösser 1,2 und der damit in diesem Beispiel direkt verbundenen Bowdenzüge 10, 11 an einer Montageeinheit, die als Ganzes mit einem Grundbauteil des Kraftfahrzeuges, an dem sich das Fern-Bedienungselement 8 befindet, verbunden wird. Dabei kann sich das Kupplungsgehäuse 3 zusammen mit dem Kupplungsschieber 4 beispielsweise an der Baueinheit mit den Schlössern 1, 2 befinden. In diesem Fall wird der Bowdenzug 9 des Fern-Bedienungselementes 8 nachträglich mit dem Kupplungsschieber 4 in dem Kupplungsgehäuse 3 verbunden.

## Patentansprüche

1. Betätigungssystem für Fahrzeuge, mit dem von einer Bedienstelle aus über ein einziges Bedienelement (8) mindestens zwei, gleiche oder ungleiche Betätigungsspiele aufweisende Betätigungsmittel (1, 2) fernbetätigbar sind, wobei mittels des Bedienelementes (8) ein einzelnes Zugseil (7) unmmittelbar bewegbar ist, das über eine lösbare Kupplung mit einer auf die Betätigungsmittel (1, 2) wirkenden Zugseilanordnung (5, 6) bewegungsgekoppelt ist und wobei ferner die Kupplungsstelle in einem Kupplungsgehäuse (3) angeordnet ist,
**gekennzeichnet durch** die Merkmale,
- jedes Betätigungsmittel (1, 2) des Betätigungssystems ist über ein separates Zugseil (5, 6) mit dem einzelnen Zugseil (7) koppelbar, wozu in dem Kupplungsgehäuse (3) ein Kupplungsschieber (4) drehgesichert geführt ist,
- an dem Kupplungsschieber (4) ist nach der Montage jeweils das zugeordnete Ende der Zugseile (5, 6, 7) aller in dem Kupplungsgehäuse (3) miteinander verbundener Zuseile (5, 6, 7) befestigt,
- die separaten Zugseile (5, 6) sind eingesetzt,
- entweder für ein zeitlich aufeinanderfolgendes Betätigen der gleiche Betätigungsspiele aufweisenden Betätigungsmittel (1, 2) mit unterschiedlichen, **durch** die Auslegung der Längen der Zugseile (5, 6) in Bowdenzügen (10, 11) festgelegten Auslösespielen zwischen dem Kupplungsschieber (4) und den jeweiligen Betätigungsmitteln (1, 2), oder
- für ein gleichzeitiges Betätigen der ungleiche Betätigungsspiele aufweisenden Betätigungsmittel (1, 2) mit **durch** die Längen der Zugseile (5, 6) festgelegten Auslösespielen zwischen dem Kupplungsschieber (4) und dem jeweiligen Betätigungsmittel (1, 2).

2. Betätigungssystem nach Anspruch 1,
**dadurch gekennzeichnet,**
**dass** es als Entriegelungseinrichtung an einem verschließbaren Schwenkdeckel oder an einer verschließbaren Motorhaube eines Kraftfahrzeuges oder an mehreren als Betätigungsmittel (1, 2) ausgebildeten Schlössern eingesetzt ist.

## Claims

1. Actuating system for vehicles, by means of which at least two actuating means (1, 2) with identical or non-identical actuating cycles can be remotely actuated from a control station using a single control (8), wherein an individual tension cable (7) coupled for movement with a tension cable assembly (5, 6) acting on the actuating means (1, 2) via a disconnectable coupling is directly movable by means of the control (8) and wherein the coupling point is further located in a coupling housing (3),
**characterised by** the following features:
- each actuating means (1, 2) of the actuating system can be connected to the individual tension cable (7) via a separate tension cable (5, 6), for which purpose a coupling slide (4) is guided and secured against rotation in the coupling housing (3),
- after assembly, the associated end of each of the tension cables (5, 6, 7) connected to one another in the coupling housing (3) is attached to the coupling slide (4),
- the separate tension cables (5, 6) are used
- either for the sequential actuation of actuating means (1, 2) having identical actuating cycles with different triggering cycles between the coupling slide (4) and the relevant actuating means (1, 2) as determined by the design of the lengths of the tension cables (5, 6) in control cables (10, 11), or
- for the simultaneous actuation of actuating means (1, 2) having non-identical actuating cycles with triggering cycles between the coupling slide (4) and the relevant actuating means (1, 2) as determined by the length of the tension cables (5, 6).

2. Actuating system according to claim 1,
**characterised in that**
it is used as release mechanism on a lockable hinged cover or on a lockable bonnet of a motor vehicle or on a plurality of locks designed as actuating means (1,2).

## Revendications

1. Système de commande pour véhicules automobiles, avec lequel, à partir d'un point de contrôle, au moins deux éléments de commande (1, 2) présentant des jeux de commande égaux ou inégaux peuvent être commandés à distance par l'intermédiaire d'un seul élément de contrôle (8), dans lequel un câble de traction unique (7), qui est couplé en mouvement avec un dispositif de câble de traction (5, 6) agissant sur les éléments de commande (1, 2) par l'intermédiaire d'un accouplement amovible, est directement déplaçable à l'aide de l'élément de contrôle (8) et dans lequel, en outre, le point d'accouplement est placé dans une boîte d'accouplement (3),
**caractérisé par** les caractéristiques,
- chaque élément de commande (1, 2) du système de commande peut être couplé au câble de traction unique (7) à l'aide d'un câble de traction séparé (5, 6), un coulisseau d'accouplement (4) étant, pour cela, guidé dans la boîte d'accouplement (3), bloqué en rotation,
- après le montage, l'extrémité correspondante des câbles de traction (5, 6, 7) de tous les câbles de traction (5, 6, 7) reliés les uns aux autres dans la boîte d'accouplement (3) est fixée au coulisseau d'accouplement (4),
- les câbles de traction séparés (5, 6) sont insérés,
- soit pour une commande successive dans le temps des éléments de commande (1, 2) présentant des jeux de commande égaux avec des jeux de déclenchement différents, déterminés dans les câbles Bowden (10, 11) par la conception des longueurs des câbles de traction (5, 6), entre le coulisseau d'accouplement (4) et les éléments de commande correspondants (1, 2), ou
- pour une commande simultanée des éléments de commande (1, 2) présentant des jeux de commande inégaux avec des jeux de déclenchement déterminés par les longueurs des câbles de traction (5, 6), entre le coulisseau d'accouplement (4) et les éléments de commande correspondants (1, 2).

2. Système de commande selon la revendication 1,
**caractérisé en ce**
**qu'**il est utilisé comme dispositif de déverrouillage dans un couvercle pivotant fermant à clé ou dans un capot de moteur d'un véhicule automobile fermant à clé ou dans plusieurs serrures configurées comme éléments de commande (1, 2).
